Europäisches Patentamt

European Patent Office

Office européen des brevets

(11) Publication number: 0 506 346 A2

# EUROPEAN PATENT APPLICATION

(21) Application number: 92302543.1

(22) Date of filing: 25.03.92

(51) Int. Cl.5: H04N 5/64

(30) Priority: 20.11.91 US 794929
29.03.91 US 677143

(43) Date of publication of application:
30.09.92 Bulletin 92/40

(84) Designated Contracting States:
BE CH DE ES FR GB IT LI NL SE

(71) Applicant: CURTIS MANUFACTURING
COMPANY, INC.
30 Fitzgerald Drive
Jaffrey, NH 03452(US)

(72) Inventor: Howitt, Robert
20 Wachusett St.
Leominster, Massachusetts 01453(US)
Inventor: Hames, Edward L.
4 Casalis Rd.
Peterborough, New Hampshire 03458(US)

(74) Representative: Williams, Trevor John
J.A. KEMP & CO. 14 South Square Gray's Inn
London WC1R 5LX(GB)

(54) Monitor filter holder and system.

(57) A monitor filter holder and system which comprises an anti-glare filter for a monitor screen and a holder having a base member adapted to be secured to the top of the monitor and having a rotatable, horizontally adjusted member to horizontally adjust the filter in relationship to the base member and being rotatable so as to place the filter holder in an upright, non-viewing position and a downward viewing position, the use position. A filter griping element which provides for the verticle adjustment of the element in relationship to the base member and further provides means for griping the frame of the filter to hold the filter in a filter viewing or filter non-viewing position, thereby providing for a monitor screen focal adjustable filter holder which may be secured to a monitor and adjusted vertically and horizontally so that the filter is positioned upwardly in relationship to the monitor screen and which, when held by the filter holder, may be moved between an non-viewng and a viewing position.

FIG.I

## Reference to Prior Applications

This application is a continuation-in-art application of U.S. Patent Application Serial No. 07/677,143, filed March 29, 1991.

## Background of the Invention

The viewing, by a user of a monitor screen, such as a computer monitor screen, particularly for long periods, or continuously for short periods, has been associated with headaches, blurry vision, burning eyes and overall visual fatigue, which are common manifestations of monitor glare. Monitor filters have been adopted, and are specifically designed, to reduce monitor glare and improve screen contrast to provide for a reduction in visual fatigue and associated ailments.

Filters composed of plastic, glass and mesh have been employed as antiglare filters for monitor screens. In particular, antiglare glass filters with optically coated glass have been suggested to reduce glare up to 95% and to provide better contrast with no or little loss of brightness and to provide for absorption of up to 98% of frequency radiation, are particularly useful. Such antiglare filters typically come enclosed within a frame, are generally rectangular filters, which size and shape may vary depending on the size and shape of the monitor screen on which the filter is to be employed. Some filters also include anti-static characteristics and they include, for example, a grounding cable connected with the filter to dissipate safely, harmful static electricity which may accumulate.

The filters are generally enclosed within a protective, molded, plastic frame which may have different colors on either side to match the aesthetics of the monitor. In the selecting of the size of the particular antiglare filter to be employed, the filter is usually mounted on the front of the monitor screen, such as, for example, with a hook and loop-type fasteners or Velcro® brand fasteners, (Velco® is a registered trademark of Velcro, U.S.A.) or by the use of adhesive tape or other arrangement whereby the particular filter of a selected size is retained in front of the monitor screen.

It is desirable to provide for a new and improved filter holder and system whereby the filter may be easily and effectively secured to the monitor and may be adapted in both horizontal and vertical directions and may accommodate filters of varying sizes into a universal filter holder.

## Summary of the Invention

The invention relates to a monitor screen filter holder and system and method and, more particularly, concerns a computer monitor screen adjustable filter holder and system.

The invention concerns a monitor screen filter holder for securing an antiglare filter in front of a monitor screen, which holder permits the movement of the filter between an antiglare filter viewing position in front of the monitor screen and a non-viewing position away from the monitor screen, and further permits for the horizontal and vertical adjustment of the filter held by the monitor filter holder in the correct position, and also provides for the employment of various size antiglare filters to be securely held by the universal filter holder.

The antiglare filter holder typically comprises of an injection-molded plastic holder having a base member, which base member is adapted to be secured to the monitor and a rotatable, horizontally adjustable member secured for rotatable movement with the base member between a filter monitor screen viewing position and a filter non-viewing screen position. Typically, the base member is secured to the top surface of the monitor and permits the movement of the rotatable member which holds the frame of the antiglare filter between a downward viewing position and a vertical, upward, non-viewing position. The rotatable member also includes means by which the member may be positioned within the base member for horizontal adjustment of the filter from the surface of the filter screen.

The holder also includes a filter securing or gripping means which is also adjustable at right angles to the rotatable, adjustable member, such as vertically, and secured to the rotatable member so that the member grasps the frame of the filter and is adapted to grasp the frame or filters of various sizes. The filter holder may be employed with filters of any size and which filter securing means also includes means to adjust vertically, the filter so held in relationship to the base member and rotatable member, so as to position the filter, as desired, in front of the monitor screen. The base member may be secured to the top, generally central section of the monitor screen, so that the rotatable member and the vertically adjustable and gripping mean members project outwardly over the face of the monitor screen in which the filter is to be installed. The base member is typically secured to the top surface of a monitor screen, either permanently or temporarily, for example, by the use of adhesive or adhesive tape or Velcro®-type fasteners or, if desired, by more permanent adhesive or mechanical means.

In one embodiment, a plastic, injection-molded computer screen monitor filter holder is provided, which holder comprises a base member having a back and face surface with the opposing extending sides with the back surface of the base member adapted to be secured to the top surface, generally centrally of the monitor, with a piece of double face adhesive tape. Each side of the base member has a plurality of generally spaced apart receiving slots, while the face surface optionally has a plurality of spaced apart central holes for horizontal adjustment purposes. The holder also includes a rotatable, horizontally adjustable member having a back, top, and face surface and sides, the back surface having a raised finger, or ridge, which is adapted to snap fit into a selected hole on the base member to retain the member at a desired horizontal relationship position in respect to the base member, thus providing with the side slots for adjustment, e.g. horizontal, of the member and the filter relative to the base from the face surface of the monitor screen.

Each side of the rotatable member has a short, cylindrical rod extending from the one end, which rod snap fits into a selected slot on each side of the base member, which also provides for adjustment of the position and permits the rotary movement of the member between a generally downward antiglare filter viewing position in front of the monitor screen a defined distance, and a vertically upright antiglare filter non-viewing position in generally the same but offset plane, but vertically raised above the top surface of the monitor screen. The rotatable member also includes a raised top element on the top surface which defines a slotted entrance which also contains, at the entrance thereof, a raised ridge element or retainer means adjacent the slotted entrance.

The holder includes a vertically adjustable, antiglare filter gripping or securing means such as open rectangular frame structure having a face and back surface, with the face surface having generally extending shelf elements to receive, in a gripping or snap in fitting relationship, the edge frame of the antiglare filter to be held by the filter holder. The filter gripping or securing means includes a generally flat, extending back shelf element having a plurality of spaced apart ridges thereon, with defined spaces in between, the back shelf element adapted to be inserted and placed within the slotted entrance of the rotatable, adjustable member and for the spaces to be snap fitting in the raised ridge element, so that the member may be placed in an adjustable, vertical, positioning relationship between the raised ridge of the member and the defined spaces between the ridge of the filter gripping means thereby permitting adjustment in the plane in front of the monitor screen of the antiglare filter held by the gripping means.

In one embodiment above, the filter securing or gripping means may comprise an adjustable, thin frame structure with a back surface to permit the frame to be adjustable within a slot and to snap-fit in selected positions and to have one edge which fits into the gripping or securing means and another lower edge to grip or secure the upper edge of the antiglare filter. In another embodiment, the securing or gripping means may be integrally molded or secured to the one, e.g., the top edge, of the antiglare filter and form a thin, rectangular frame structure extending upwardly and generally centrally of the top filter edge with one surface, e.g. the back surface, having a plurality of aligned, spaced apart grooves and ridges which snap in lace into grooves and ridges on one surface of the rotatable member when the thin frame is slid into a slot on the rotatable member. In this embodiment, an antiglare, antistatic filter would be designed for use with the filter holder and the holder would not accommodate all types of antiglare filters, but no specific gripping means at the other lower end of the gripping or securing means.

The antiglare filter holder thus provides for a simple, three-piece, integrally molded, antiglare filter holder, or two piece if the antiglare filter is modified, whereby the holder may be secured to the top surface of the console having the screen in front of which the filter is to be used, with the frame of the filter and the filter varying in size, held by the filter holder and the filter so held adjustable both vertically and horizontally and further rotatable between an antiglare viewing position directly in front of the monitor screen and a vertically raised, antiglare filter non-viewing position, but vertically rotatably moved to a vertical position above or to the side of the monitor when not in use.

The invention provides a system, for example, with a combination of a monitor having a screen, particularly a computer monitor having a screen, and a filter holder adapted to be either permanently or temporarily secured to a surface of the monitor, and filters, particularly antiglare filters such as glass antiglare filters having a generally rectangular edge frame, adapted to be secured and held by the filter holder, adjustable both vertically and horizontally, to be positioned in front of the monitor screen and further, to move between a viewing and non-viewing position in an effective and simple manner.

The invention will be described for purposes of illustration only in connection with particular preferred embodiments; however, it is recognized that various changes, modifications, additions and improvements may be made to the illustrated embodiments by those people skilled in the art, all falling within the spirit and scope of the invention.

## Brief Description of the Drawings

**Fig. 1** is a perspective view from above of a antiglare filter holder system of the invention illustrating an antiglare filter held in a use position by the filter holder, with the filter shown in the dotted lines in a non-viewing position.

Fig. 2 is an exploded view of the antiglare filter holder of **Fig. 1** prior to assembly.

Fig. 3 is a top view of the filter holder of **Fig. 1**.

Fig. 4 is a front plan view of the filter holder of **Fig. 1**.

Fig. 5 is a side plan view of the filter holder of **Fig. 1**.

Fig. 6 is a back plan view of the filter holder of **Fig. 1**.

Fig. 7 is a bottom plan view of the filter holder of **Fig. 1**.

Fig. 8 is a back side view of the adjusted element of the filter holder of **Fig. 1**.

Fig. 9 is a bottom plan view of the horizontally adjustable element of the filter holder of **Fig. 1**.

Fig. 10 is a perspective, exploded, front plan view of another embodiment of an antiglare filter holder system of the invention.

Fig. 11 is a back plan view of the assembled antiglare filter holder system of Fig. 10.

## Description of the Embodiments

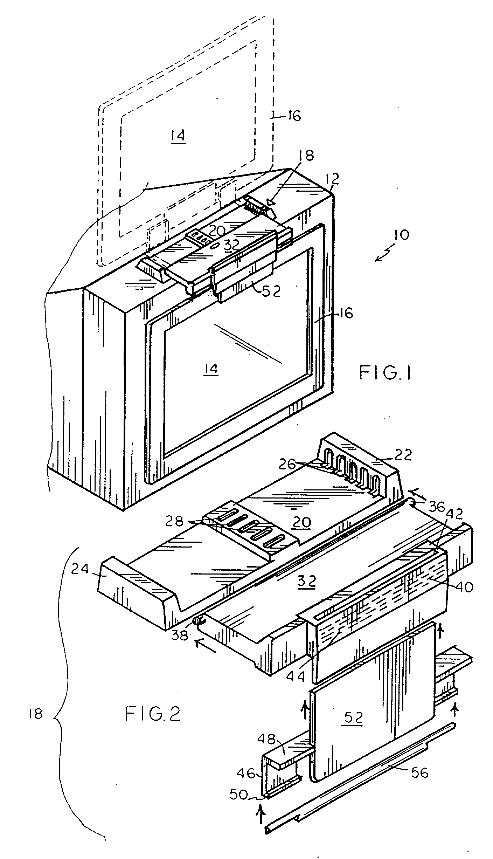

Fig. 1 illustrates a filter holder system of the invention 10 which comprises a computer console 12 having a screen (not shown) having an antiglare, coated glass filter 14 positioned in front of the console screen in a viewing position, which antiglare filter has a generally rectangular shape and a rectangular, plastic, molded filter frame 16. The system 10 shows the antiglare filter 14 secured through the edge of the filter frame 16 by a filter holder 18 positioned on the top surface of the console 12 generally centrally thereof, with the antiglare filter 14 shown in solid lines in a viewing position before the console screen and illustrated in dotted lines in a non-viewing position above the console screen.

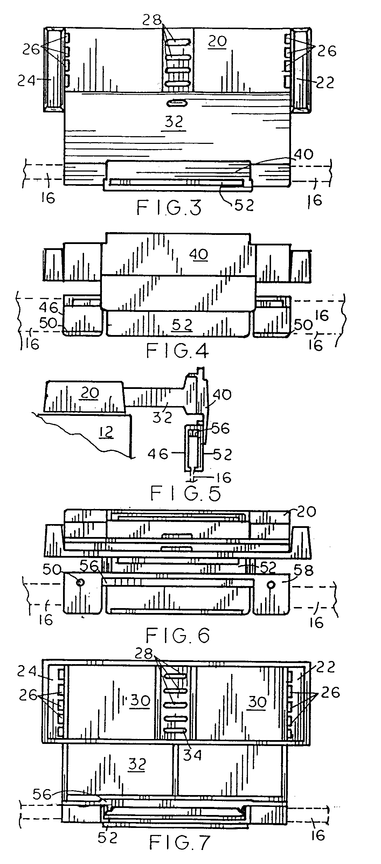

Fig. 2 is an exploded view of the filter holder 18 of the invention showing a base 20 having a flat top surface with the extending sides 22 and 24 with each side having a plurality of generally parallel, spaced apart receiving slots 26 in the sides with a central raised section having a plurality of spaced apart, generally parallel holes 28 or slots, the back surface of the base 20 has a double sided adhesive tape 30 (see **Fig. 7**) so that the base may be easily secured to the top, central surface of a console monitor 12 as illustrated in **Fig. 1**.

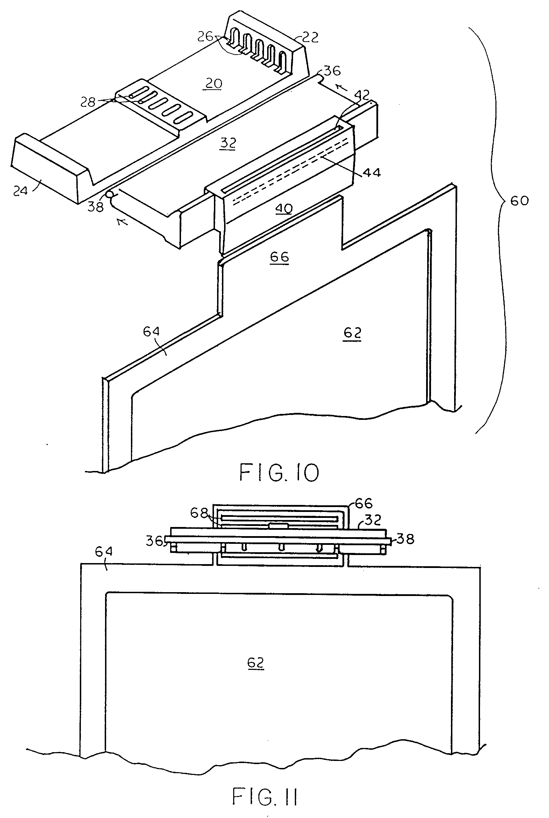

The holder includes a horizontal, rotatable member 32, generally L-shaped having a downwardly projecting L-shaped member 40 which defines a slotted entrance 42 on the top thereof, wherein the member 32 has a pair of rod-like short extensions 36 and 38 thereof, which extensions 36 and 38 are adapted to snap fit in to a designated receiving hole 26 on either side of the base 20, so that member 32 may be vertically or horizontally positioned within base 20 to project, as desired, out over the front of the monitor 12 a defined distance as illustrated more particularly in **Fig. 1**. Shown in dotted lines in **Fig. 2** is a plurality of ridges 44 defining grooves adjacent the slotted entrance 42 (see also **Fig. 9**) directly below member 32 and shown in a position with a vertically adjustable member 52 having a flat surface in the front and a plurality of generally parallel, spaced apart, raised ridge elements 54 on the back surface. The member 52 includes a generally rectangular filter frame gripping edge with a top surface 48, a back surface 46, and a ridge 50 together with an elongated adjuster bar 56 adapted to be snapped in place through the ridges at each end into holes 58 so that the generally rectangular space defined by 50, 46 and 48 for a particular filter frame 16 may be adjusted, as desired, by the insertion and snap in of the adjuster bar 56 to insure that the frame of the filter 14 is snugly secured within the filter frames 48, 46 and 50 with or without the adjuster bar 56. As illustrated, the vertically adjustable member 52 having the ridges 54 is inserted into the lower portion of the slot 42 of element 32 with the ridge 44 engaged in a snap in relation in the space between the ridges 54 of the shelf 52 so as to position the element 52 and the filtering, as desired, in a generally desired vertical position in front of the monitor 12.

As illustrated in the exploded view of **Fig. 2** and in the assembled views of **Figs. 3 - 7** and views **8** and **9,** the filter holder provides for gripping the filter frame 16 with filter 14 member 52 vertically adjusting member 52 in relationship to member 32 and a horizontally adjusting member 32 by its position on the base 20 permitting member 32 together with the member 52 to be rotated between a filter viewing position, as illustrated in **Fig. 1**, and a non-viewing position (dotted lines, **Fig. 1**) wherein member 32 rotates to place the filter 14 in a vertically upright reverse non-viewing position. As shown, member 32 has a centrally disposed finger 34 which is adapted to fit into a designated hole 28 to aid in holding the member 32 in position.

Figs. 10 and 11 illustrate another embodiment of an antiglare filter holder system 60 which holder includes the base 20 and the rotatable member 32 for snap fitting into the base 20 and which includes the downward projection 40 with the top slotted entrance 42 and one or more spaced apart, raised, parallel ridges 44 defining grooves on the back surface of the projection 40. In this embodiment 60, the antiglare filter 62 includes a bonded plastic edge 64 and a centrally, upwardly extending, thin, plastic frame 66 integral and secured to the filter edge 64. The frame 66 includes on the back surface a plurality of raised ridges to define spaced apart, parallel grooves or ridges 66 which are designed to snap-fit into the corresponding grooves or ridges 44 to secure the filter 62 in a desired, adjustable, vertical position in front of a monitor screen.

Fig. 10 illustrates the embodiment in an exploded, front, unassembled, perspective view of the system 60, with the thin frame 66 below the slotted entrance 42 and ready for insertion therein.

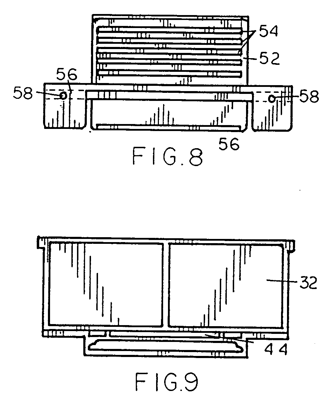

Fig. 11 illustrates the back assembled view of the system 60 with the filter 62 and the frame 66 in a snap-fit, defined position within projection 40. In this embodiment, there is no securing or gripping means at the end of the projection 40, but rather the frame 66 is secured to the filter 62 so that only a filter 62 having a frame 66 may be used with the base 20 and rotatable member 32 to provide a system 60. This system 60 functions and is used in the same manner as **Figs. 1-9**, but avoids the need to have separate gripping means for the filter edge on the end of projection 40.

The antiglare filter holder and system, as illustrated and described, provides for the horizontal and vertical adjustment of the filter 14 before a monitor 12 and provides for the easy positioning in a viewing position in front of a monitor 12 or in a non-viewing position above the monitor 12. It is recognized, of course, that the filter holder may be employed preferably on the top, but on other surfaces of the monitor and that the adjuster bar is optional, as the surfaces 46, 48 and 50 are so designed to grasp the frame edge of the filter required.

## Claims

1. A monitor screen viewing filter holder adapted to hold a filter which holder comprises:

   a) a base member adapted to be secured to a monitor surface adjacent a monitor screen for which screen the filter is to be employed;

   b) a rotatable and directionally adjustable means to provide for rotational movement of the means on the base between a filter viewing position wherein a filter is held in front of the monitor screen in a viewing position and wherein the filter is removed from the front of the monitor screen in a non-viewing position and to provide for the adjustable positioning of the said means so as to adjust the distance of the filter in the filter viewing position from the monitor screen;

   c) an adjustable filter securing means to provide for securing of the filter and to provide for adjustable movement of the securing means with a filter to be secured in a plane generally adjacent and parallel to the monitor screen thereby providing for the attachment of the filter holder to the monitor screen and the horizontal adjustment of the filter distance from the screen and the vertical adjustment parallel to the screen.

2. The holder of Claim 1 wherein the base member has a back and face surface and the extending sides, the back surface containing an adhesive means so as to permit the base surface to be secured to a surface of the monitor, and each side having a plurality of spaced apart receiving slots and wherein the rotatable and adjustable means include short rod extensions at either side thereof, which rod extensions are placed within the spaced apart receiving slots to provide for the rotational movement of the rotatable and adjustable means between viewing and non-viewing positions, and also to provide for positioning of the rotatable adjustable means relative to its position on the base and the distance of the filter from the monitor screen.

3. The holder of claim 1 or 2, wherein the rotatable and adjustable directional means includes an extending element containing a slot therein, and wherein the filter securing and adjustable means includes an extending shelf element adapted to be snap fitted within the slot of the rotatable and adjustable means to adjust the position of the secured filter relative to the rotatable means by the movement of the shelf element within the slot.

4. The holder of claim 3, wherein the rotatable means includes a raised ridge element adjacent the slot wherein the shelf element includes, on one surface thereof, a plurality of raised ridge, generally parallel, spaced apart raised ridge elements between the raised ridge elements and adapted to fit into the raised ridge in a snap-in relationship so as to permit adjustment of the filter securing means in a plane in front of the monitor screen.

5. The filter holder of any preceding claim, wherein the filter securing means comprises a generally right-angled surface extending from the rotatable and directionally adjustable means and having a slot therein with a surface having a raised element adapted to secure the top section of a filter therein.

**6.** An antiglare filter holder system which includes a filter holder according to any preceding claim, and an antiglare filter secured by the filter holder.

**7.** An antiglare filter holder system according to claim 6, wherein the filter has a thin frame extending from one edge of the filter, the frame having a one surface means to secure in a vertically adjustable manner the filter to the securing means.

**8.** An antiglare filter holder system according to claim 6, when appendant to claim 5, wherein the antiglare filter has a thin frame integrally secured to and extending upwardly from the top edge of the filter, the frame having on one surface a plurality of grooves which snap-fit into a raised element of the securing means to provide for vertical adjustment of the antiglare filter parallel to the monitor screen.

**9.** A method of securing an antiglare filter in front of a monitor screen, which method comprises:
(a) securing a filter holder to the top surface of a monitor having a screen which glare is to be filtered by a filter placed in front thereof;
(b) securing the frame edge of the filter to the holder in a snap-fitting, releasable relationship;
(c) adjusting the filter holder to provide for adjustment of the distance of the filter from the surface of the monitor screen;
(d) adjusting the filter holder to provide for adjustment of the filter in a plane generally parallel to the monitor screen; and
(e) rotatably moving the filter in the holder between a viewing position wherein the filter is held in a defined position in front of the monitor screen and a non-viewing position above the monitor.

**10.** The method of claim 9, which includes integrally securing a thin, rectangular frame to the top edge of an antiglare filter, the frame extending upwardly and centrally in the plane of the filter and inserting the frame of the said filter in a snap-in relationship with an element of the filter holder to secure the antiglare filter in a defined adjustable position in front of the monitor screen.

FIG.1

FIG.2

FIG.3

FIG.4

FIG.5

FIG.6

FIG.7

FIG.8

54
52
56
58
58
56

FIG.9

32
44

FIG.10

FIG.II